## Europäisches Patentamt
## European Patent Office
## Office européen des brevets

(11) Numéro de publication: **0 266 295**
**A1**

(12) **DEMANDE DE BREVET EUROPEEN**

(21) Numéro de dépôt: 87480012.1

(22) Date de dépôt: 24.09.87

(51) Int. Cl.⁴: **A 01 B 69/00**
B 62 D 1/26, A 01 D 34/03

(30) Priorité: 26.09.86 FR 8613469
22.01.87 FR 8700723

(43) Date de publication de la demande:
04.05.88 Bulletin 88/18

(84) Etats contractants désignés:
DE FR GB IT NL SE

(71) Demandeur: **Jonas, André**
**31, chemin du Colombier**
**F-06650 Le Rouret (FR)**

**Jonas, Bernard**
**29, Chemin du Colombier**
**F-06650 Le Rouret (FR)**

(72) Inventeur: **Jonas, André**
**31, chemin du Colombier**
**F-06650 Le Rouret (FR)**

**Jonas, Bernard**
**29, Chemin du Colombier**
**F-06650 Le Rouret (FR)**

(54) **Système pour la réalisation automatique de travaux agricoles tels que la tonte de gazon.**

(57) L'invention a pour objet un système pour la réalisation automatique de travaux agricoles tels que la tonte du gazon, comprenant en combinaison un rail de guidage (110) composé d'un tube fendu le long de sa génératrice supérieure, sensiblement enterré dans le sol, et un véhicule agricole tel qu'une tondeuse à gazon, muni d'un chassis de support (101), d'au moins un outil tel qu'une barre de coupe (102), de moyens d'entraînement (103) et des moyens de guidage (106, 108) agencés pour coopérer avec le rail de guidage de manière à amener ledit véhicule à suivre sensiblement le rail de guidage.

Fig. 10

**Description**

Système pour la réalisation automatique de travaux agricoles tels que la tonte du gazon.

La présente invention concerne un système pour la réalisation automatique des travaux agricoles tels que la tonte du gazon.

Certains travaux agricoles, et plus particulièrement les travaux domestiques tels que la tonte du gazon, sont fastidieux et fatiguants à réaliser et doivent en outre être exécutés très régulièrement. C'est ainsi par exemple qu'une pelouse exige d'être tondue au moins une fois par semaine. A défaut d'une telle régularité, par exemple en cas d'absence de la personne chargée de l'opération, le gazon prend un aspect abandonné et inesthétique. En outre, l'opération de tonte qui suit une telle absence est toujours beaucoup plus longue et beaucoup plus pénible qu'une tonte normale effectuée de façon régulière.

En outre, bons nombres de ces travaux agricoles ne sont pas sans danger, notamment lorsqu'ils sont réalisés par des particuliers sans grande expérience. C'est ainsi que la tonte du gazon est responsable d'un trop grand nombre de doigts ou de mains coupés.

Il existe donc un vif besoin pour un système qui permettrait de réaliser automatiquement, sans intervention humaine, un certain nombre de travaux agricoles tels en particulier que les travaux agricoles domestiques comme la tonte du gazon.

La présente invention vise à fournir un tel système qui puisse être installé sans difficultés sur un terrain tel qu'une pelouse, et qui soit suffisamment simple et bon marché pour pouvoir être acquis par des particuliers.

A cet effet, l'invention a pour objet un système pour la réalisation automatique de travaux agricoles tels que la tonte du gazon, caractérisé par le fait qu'il comprend en combinaison un rail de guidage sensiblement enterré dans le sol, et un véhicule agricole tel qu'une tondeuse à gazon, muni d'un châssis de support, d'au moins un outil tel qu'une barre de coupe, de moyens d'entraînement et des moyens de guidage montés de façon mobile sur ledit châssis de support et agencés pour coopérer avec le rail de guidage de manière à amener ledit véhicule à suivre sensiblement le rail de guidage.

Selon un premier mode de réalisation, lesdits moyens d'entraînement sont des moyens d'entraînement et de direction et ledit véhicule est en outre muni de moyens de commande pour commander lesdits moyens d'entraînement et de direction en fonction de la position relative des moyens de guidage par rapport au châssis de support.

Le rail de guidage peut avantageusement être réalisé sous la forme d'un tube en matériau relativement élastique, par exemple un tuyau en matière plastique, fendu le long de sa génératrice supérieure, lesdits moyens de guidage comprenant un organe de guidage agencé pour se déplacer à l'intérieur dudit tube en étant entraîné par ledit véhicule par l'intermédiaire d'un organe de support traversant la fente de ce tube.

On comprend dans ces conditions que l'organe de guidage entraîné longitudinalement le long du tube par son organe de support suit latéralement les courbes du tube, ce qui l'amène à s'incliner par rapport au châssis de support du véhicule et à actionner ainsi les moyens de commande permettant de ramener le véhicule dans l'axe du tube.

L'organe de support peut par exemple comprendre une lame profilée à une extrémité de laquelle est monté ledit organe de guidage, ladite lame étant montée à son autre extrémité de façon articulée par rapport au châssis du véhicule.

Dans un mode de réalisation particulier, lesdits moyens d'entraînement et de direction comprennent deux chenilles et les moyens de commande comprennent des moyens pour cesser sélectivement l'entraînement d'une des chenilles lorsque les moyens de guidage s'écartent d'une position neutre prédéterminée par rapport au châssis.

L'emploi de chenilles permet l'utilisation d'un asservissement très simple par tout ou rien. On peut néanmoins envisager un véhicule à roues directrices commandées par un asservissement proportionnel.

Dans le cas d'un véhicule à chenilles, les moyens d'entraînement et de direction peuvent comprendre deux moteurs électriques agencés pour entraîner chacun une des chenilles, lesdits moyens pour cesser sélectivement l'entraînement d'une des chenilles comprenant alors deux commutateurs disposés chacun dans le circuit d'alimentation d'un des moteurs et dont l'organe d'actionnement est agencé pour coopérer avec une came montée sur lesdits moyens de guidage.

Il va de soi que l'on peut adopter diverses positions respectives pour les commutateurs et la came et qu'en particulier ces positions peuvent être inversées.

Selon un deuxième mode de réalisation, ledit châssis de support est en appui sur le sol par l'intermédiaire d'une béquille avant portant à son extrémité inférieure un organe de guidage agencé pour coopérer avec le rail de guidage, et ledit véhicule est muni d'un moteur d'entraînement monté sur le châssis de support et de deux organes de roulement latéraux arrière, lesdits organes de roulement étant agencés pour être entraînés par ledit moteur d'entraînement par l'intermédiaire d'un différentiel.

Un tel agencement permet au véhicule de suivre le rail enterré. En effet, lorsque ce dernier amorce une courbe, l'organe de guidage provoque un pivotement du véhicule sur ses deux organes de roulement arrière. Un tel pivotement est possible malgré l'avance du véhicule du fait que les organes de roulement sont entraînés par l'intermédiaire d'un différentiel.

On notera que par différentiel on entend non seulement le dispositif mécanique généralement connu sous ce nom, mais également d'autres dispositifs permettant d'entraîner deux organes de roulement simultanément à des vitesses éventuellement différentes. C'est ainsi que l'on peut prévoir pour l'entraînement des organes de roulement, deux moteurs à courant continu dont les enroulements sont montés en série, chacun des moteurs entraînant l'un des organes de roulement.

Dans un mode de réalisation particulier de l'invention, ledit rail de guidage comprend également un tube en matériau relativement élastique fendu le long de sa génératrice supérieure et ledit organe de guidage est agencé pour se déplacer à l'intérieur dudit tube en étant poussé par ledit véhicule par l'intermédiaire de ladite béquille traversant la fente de ce tube.

Cette béquille peut par exemple être constituée par une lame profilée montée à son extrémité supérieure pivotante par rapport au châssis du véhicule autour d'un axe sensiblement vertical.

On remarquera que l'utilisation d'énergie électrique pour l'entraînement du véhicule permet d'automatiser sans difficultés, non seulement l'avance du véhicule, mais également l'ensemble de son cycle de travail. Il suffit en effet de prévoir un programmateur assurant le départ du véhicule le long de son rail de guidage à des heures et jours prédéterminés à partir d'un poste de départ et d'arrivée. Le véhicule peut alors être muni d'une batterie permettant l'alimentation de ses moteurs électriques, et l'on prévoit au poste de départ et d'arrivée un chargeur de batterie sur lequel le véhicule se branche automatiquement à la fin de son cycle de travail.

En variante, des panneaux de cellules photovoltaïques peuvent être montés directement sur le véhicule lui-même.

Dans le cas d'un système automatique de tonte du gazon, le véhicule pourra avantageusement comprendre une barre de coupe frontale disposée le long de son bord avant. Toutefois, si l'on souhaite que le véhicule dispose d'une bonne maniabilité, par exemple pour pouvoir passer entre les arbres, les massifs de fleurs, les clôtures... il est préférable que cette lame frontale n'occupe qu'une largeur limitée.

Afin d'éviter l'inconvénient d'une largeur de coupe trop faible qui en résulterait, on peut prévoir au moins une barre de coupe montée latéralement sur le châssis de support du véhicule, des moyens étant prévus pour rétracter ladite barre de coupe latérale en cas de choc sur un obstacle.

Un tel agencement peut fonctionner en toute sécurité. C'est ainsi qu'il est possible de prévoir sur la barre de coupe frontale un commutateur provoquant l'arrêt total du véhicule en cas de choc. Par contre, la barre de coupe latérale se rétracte et demeure par conséquent sans danger.

Cette barre de coupe latérale peut par exemple être montée à rotation autour d'un axe sensiblement vertical, solidaire du châssis, de manière à pouvoir pivoter vers l'arrière en cas de choc, contre l'action de moyens de rappel agencés pour ramener la barre de coupe dans sa position latérale normale après le passage de l'obstacle.

Dans un mode de réalisation particulier, on prévoit deux barres de coupe latérales disposées chacune d'un des côtés du véhicule et agencées pour pouvoir éventuellement être rétractées simultanément.

On décrira maintenant à titre d'exemple non limitatif, deux modes de réalisation particuliers de l'invention en référence aux dessins schématiques annexés dans lesquels :

- la figure 1 est une vue de côté d'un système selon un premier mode de réalisation de l'invention, et plus particulièrement d'une tondeuse à gazon adaptée à ce système,

- la figure 2 est une vue en coupe selon la ligne II-II de la figure 1,

- la figure 3 est une vue de dessus à plus grande échelle du dispositif de guidage de la tondeuse des figures 1 et 2,

- la figure 4 est une vue de côté partiellement en coupe du dispositif de la figure 3 et du rail de guidage selon l'invention,

la figure 5 est une vue en coupe selon la ligne V-V de la figure 4,

la figure 6 est une vue de derrière d'une barre de coupe latérale de la tondeuse à gazon des figures 1 et 2,

- la figure 7 est une vue de dessus partielle de cette barre de coupe,

- la figure 8 est une vue en plan d'un terrain équipé d'un système conforme à l'invention,

- la figure 9 est un schéma électrique du circuit d'alimentation des moteurs d'entraînement de la tondeuse à gazon des figures 1 et 2,

- la figure 10 est une vue de dessus d'une tondeuse à gazon selon un deuxième mode de réalisation de l'invention,

- la figure 11 en est une vue de côté, et

- la figure 12 est une vue en coupe à plus grande échelle selon la ligne XII-XII de la figure 11.

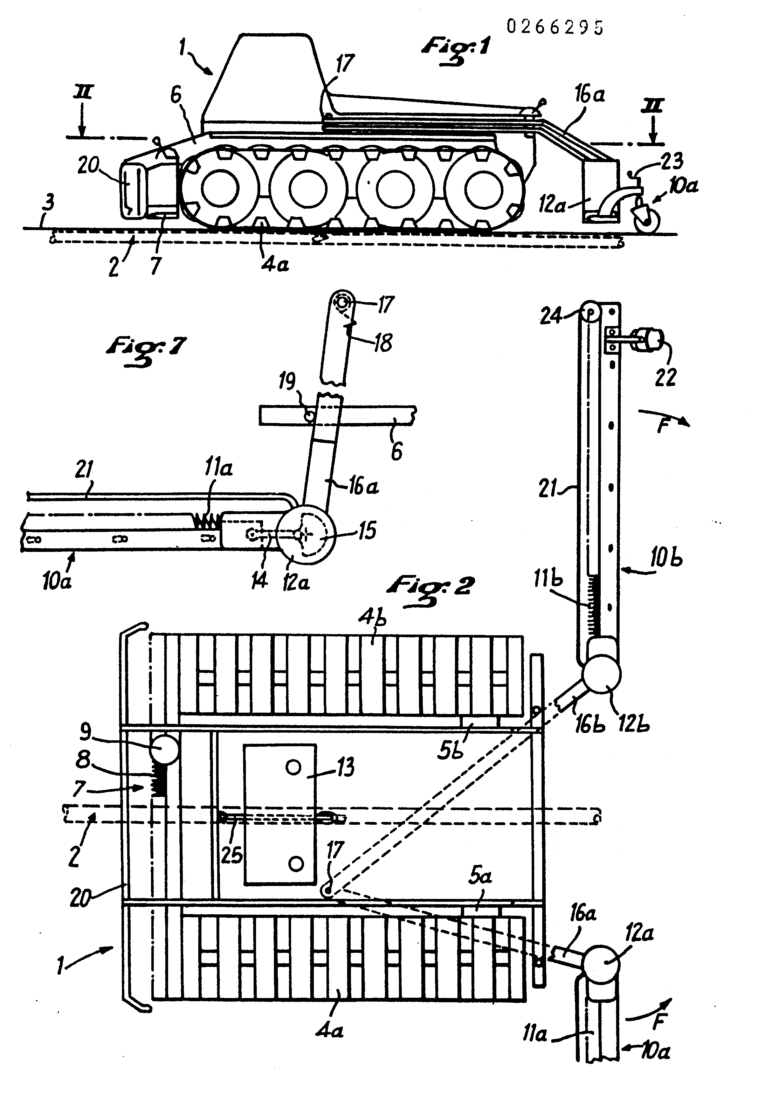

Comme représenté aux figures 1 et 2, le système selon le premier mode de réalisation de l'invention comprend d'une manière générale un véhicule 1 formant tondeuse à gazon, et un tuyau 2 constituant un rail enterré dans le sol 3 d'une pelouse.

Le véhicule 1 est muni de deux chenilles 4a et 4b entraînées respectivement par des moteurs électriques 5a et 5b.

Le châssis 6 du véhicule 1 supporte une barre de coupe frontale 7 dont la lame 8 est entraînée par un moteur électrique 9, et deux barres de coupe latérale 10a et 10b dont les lames 11a et 11b sont respectivement entraînées par des moteurs électriques 12a et 12b.

Une batterie 13 permet l'alimentation des moteurs électriques 5a, 5b, 9, 12a et 12b.

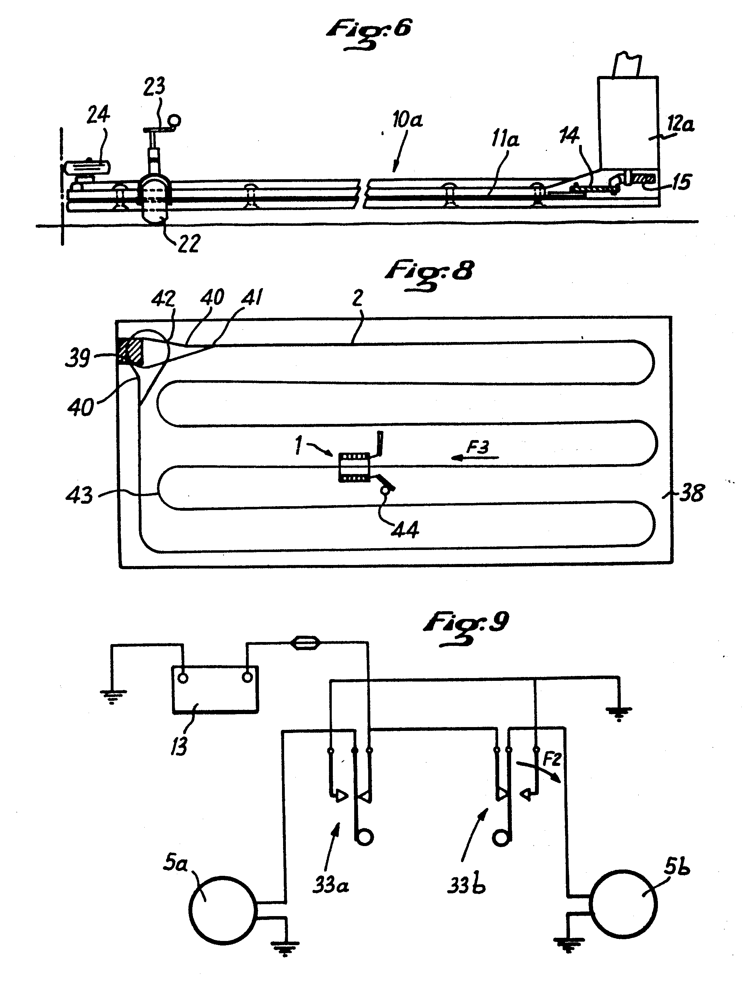

Les moteurs 12a et 12b entraînent les lames 11a et 11b à l'aide d'un dispositif à bielle 14 et manivelle 15 (figures 6 et 7).

Chaque barre de coupe latérale 10a et 10b est montée à son extrémité la plus proche de l'axe du véhicule 1 sur des bras 16a et 16b respectivement, pivotant autour d'un axe 17 solidaire du châssis 6. Les barres de coupe peuvent ainsi pivoter vers l'arrière autour de l'axe 17, comme montré par les flèches F de la figure 2.

Des ressorts de rappel 18 montés sur l'axe 17 permettent de ramener les barres de coupe vers l'avant dans leur position latérale où elles sont en butée sur des doigts de blocage 19 solidaires du châssis 6.

Le véhicule 1 comporte en outre à sa partie avant un pare-choc 20 muni d'un interrupteur générale (non représenté) permettant, en cas de choc frontal, de couper l'alimentation de tous les moteurs électriques.

Chaque barre de coupe comporte également un pare-choc avant 21 qui, lorsque la barre de coupe rencontre un obstacle, provoque par réaction le pivotement de la barre correspondante vers l'arrière dans le sens de la flèche F.

Les barres de coupe sont en outre munies à leur extrémité la plus éloignée de l'axe du véhicule 1 d'une roulette 22 permettant le réglage de la hauteur de coupe par l'intermédiaire d'une manivelle 23, et d'un galet 24 à axe vertical permettant une progression régulière de la barre de coupe lorsque le véhicule 1 se déplace le long d'un mur ou d'une clôture par exemple.

On remarquera que l'axe 17 est excentré par rapport au plan médian du véhicule 1 et que les bras 16a et 16b ont en conséquence une longueur différente. Il en résulte que les deux barres de coupe 10a et 10b peuvent être pivotées simultanément vers l'arrière dans le cas où le véhicule 1 longe deux obstacles situés l'un à sa droite, l'autre à sa gauche.

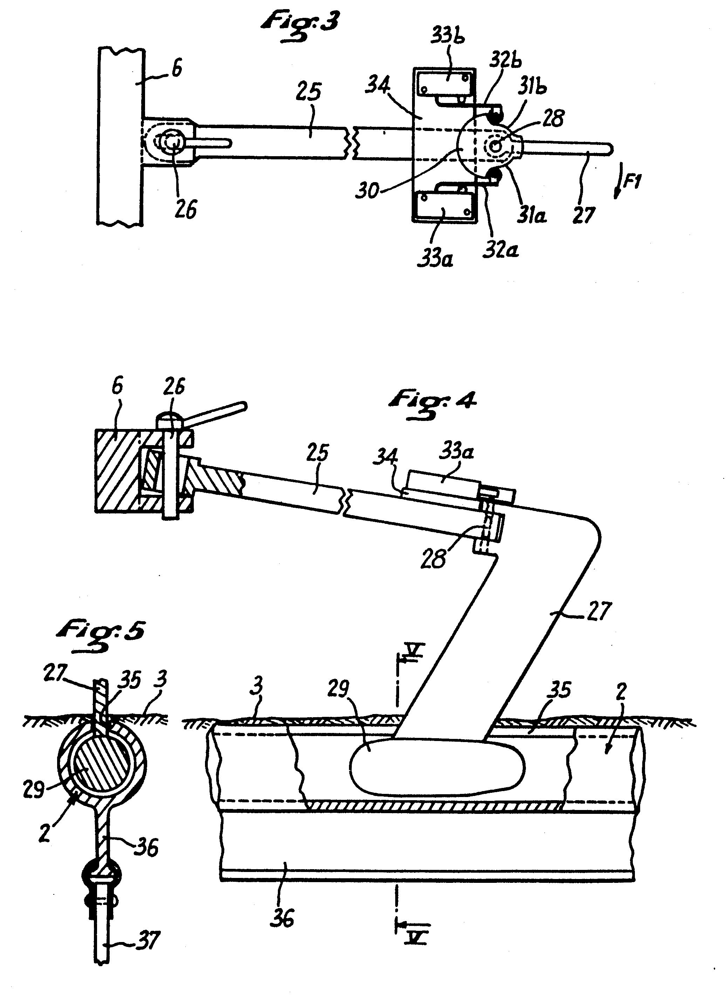

On décrira maintenant le dispositif de guidage du véhicule 1 en référence plus particulièrement aux figures 3, 4, 5 et 8.

Une barre d'attelage 25 est montée librement à une de ses extrémités sur une chape du châssis 6 à l'aide d'une goupille 26. A l'autre extrémité de la barre d'attelage 25, une lame de support 27 est montée à rotation autour d'un axe 28, et reçoit à son extrémité opposée à l'axe 28 un organe de guidage profilé 29 susceptible de glisser dans le tube 2.

Au voisinage de l'axe 28, la lame 27 porte une came 30 portant deux surfaces de came 31a et 31b. Chaque surface de came 31a et 31b est agencée pour coopérer respectivement avec un suiveur de came constitué par l'extrémité de l'organe d'actionnement 32a et 32b de commutateurs 33a et 33b. Les commutateurs 33a et 33b sont montés sur une platine 34 solidaire de l'extrémité du bras d'attelage 25 opposé à l'axe 26.

Les commutateurs 33a et 33b permettent, lorsqu'ils sont dans leur position normale représentée à la figure 8, d'alimenter à partir de la batterie 13 les moteurs 5a et 5b respectivement. Si la lame du support 27 est déplacée, par exemple dans le sens de la flèche F1 de la figure 3, ce qui correspond à un virage du tube 2 dans la direction opposée à la flèche F1, le commutateur 33b est actionné par la came 30, ce qui a pour effet de provoquer son basculement symbolisé à la figure 8 par la flèche F2. Le moteur 5b n'est ainsi plus alimenté provoquant l'arrêt de la chenille 4b, ce qui a pour effet de faire amorcer au véhicule 1 un virage l'amenant à suivre le tube 2.

Le tuyau 2, réalisé par exemple en polyéthylène, est fendu le long de sa génératrice supérieure 35, de manière à laisser le passage à la lame de guidage 27 qui est profilée de manière à ouvrir sans effort lors de son passage les bords de la fente 35.

Le tube 2 comporte en outre une nervure 36 permettant d'assurer que la fente 35 couvre bien dans la partie supérieure du tube 2 et permettant en outre l'ancrage du tube dans le sol à l'aide de piquets 37.

La figure 8 représente une pelouse 38 sous la surface de laquelle est enterré un tube de guidage 2 tel que décrit ci-dessus. Ce tube est replié en zig-zag de manière que, lorsque le véhicule 1 le parcourt, ses barres de coupe couvrent pratiquement toute la surface du terrain 38. Une station d'arrêt et de départ 39 est prévue dans un angle du terrain 38 et est munie d'un programmateur et d'un chargeur de batterie (non représentés). Deux boucles de retournement 40 sont prévues à la station d'arrêt et de départ 39 à chaque extrémité du tube 2. Ainsi, les opérations de tonte successives s'effectuent à chaque fois en sens inverse de la fois précédente. Des pièces de jonction 41 et de croisement 42 sont prévues à cet effet.

Le véhicule 1 se déplace le long du tube 2 dans le sens de la flèche F3 par exemple. Tant que le véhicule 1 est dans l'axe du tube 2, la came 30 est dans sa position neutre représentée à la figure 3, et les moteurs des deux chenilles sont alimentés. Si par contre le véhicule dévie par exemple vers la droite, ou que le tube de guidage 2 amorce un virage vers la gauche tel que 43, la lame de support 27 est entraînée par l'organe de guidage 29 qui glisse dans le tube 2 à pivoter par rapport au châssis 6 du véhicule. Comme cela a été vu précédemment, ceci a pour effet de couper le moteur 5a de la chenille 4a et par conséquent de faire tourner le véhicule vers la gauche. Il s'en suit que celui-ci revient dans l'axe du tube 2.

Si une barre de coupe latérale rencontre un obstacle tel qu'un arbre 44, elle se rétracte vers l'arrière, puis est ramenée vers l'avant sous l'action de son ressort de rappel sans modifier le fonctionnement du véhicule 1. Bien entendu le tracé du tube 2 est prévu de telle sorte qu'aucun obstacle fixe ne se présente devant la barre de coupe frontale, et plus particulièrement devant le pare-choc 20 du véhicule. Si par contre un tel obstacle se présente de façon imprévue, le commutateur général provoque l'arrêt du véhicule et par conséquent l'interruption du cycle de travail en cours.

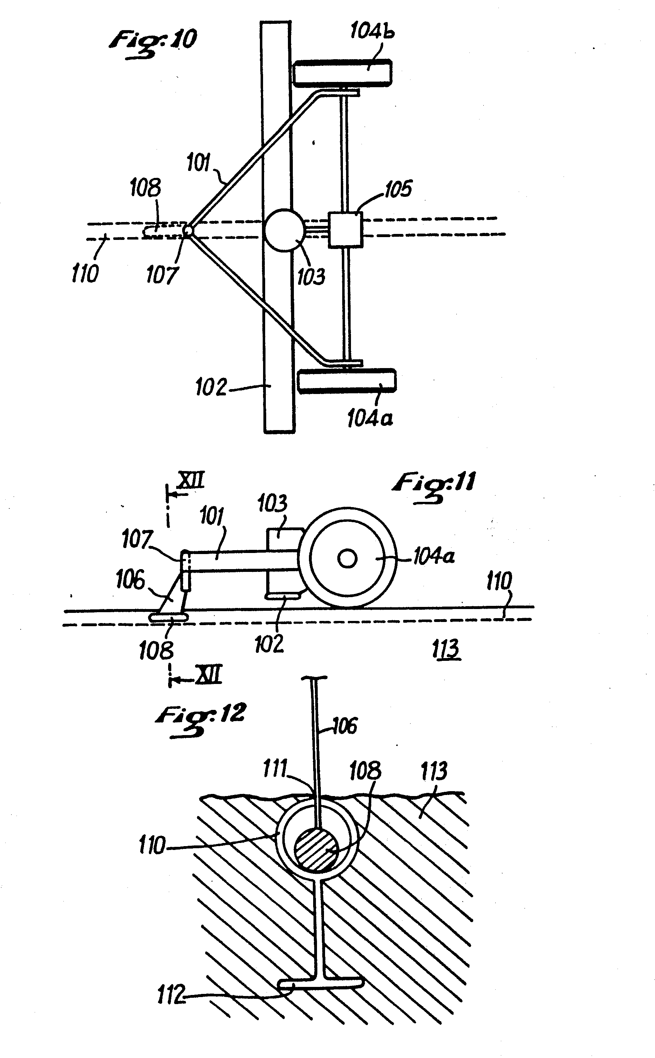

La tondeuse représentée à la figure 10 comporte un châssis triangulaire 101 dont la pointe est dirigée vers l'avant dans le sens d'avance de la tondeuse. Ce châssis supporte une barre de coupe 102 entraînée par un moteur électrique 103 alimenté par une batterie (non représentée).

A son extrémité arrière, le châssis 101 supporte deux roues latérales 104a et 104b entraînées également par le moteur 103 par l'intermédiaire d'un différentiel 105.

A son extrémité avant, le châssis 101 supporte une béquille 106 constituée par une lame profilée montée pivotante à sa partie supérieure sur le châssis 101 autour d'un axe 107. A son extrémité inférieure, la béquille profilée 106 reçoit un organe de guidage profilé 108.

Comme montré à la figure 12, cet organe de guidage est agencé pour être poussé par la béquille 106 à l'intérieur d'un tube 110 en matière plastique, fendu le long de sa génératrice supérieure 111. La béquille 106 traverse la fente du tube 110.

Le tube 110 est en outre solidaire d'un profilé d'ancrage 112 lui permettant d'être maintenu enterré dans le sol 113.

Lorsque la tondeuse à gazon avance, l'organe de guidage profilé 108 est poussé dans le tube 110 de sorte que, lorsque celui-ci amorce un virage, la tondeuse suit le tube. La roue intérieure au virage tourne alors plus lentement que la roue extérieure ce qui est possible du fait du différentiel 105.

Diverse variantes et modifications peuvent bien entendu être apportées à la description qui précède sans sortir pour autant du cadre ni de l'esprit de l'invention.

C'est ainsi que les roues peuvent être remplacées par des rouleaux de même largeur que la barre de coupe pour écraser l'herbe fraichement coupée.

De même, la tondeuse décrite ci-dessus pourrait comporter une partie arrière articulée sur le châssis et formant remorque.

On peut également prévoir un interrupteur pour couper le moteur si l'organe de guidage sort du rail et que la béquille se met en travers.

La tondeuse pourrait également être alimentée en courant alternatif à partir du secteur, à l'aide d'un câble d'alimentation monté sur un enrouleur.

## Revendications

1. Système pour la réalisation automatique de travaux agricoles tels que la tonte du gazon, caractérisé par le fait qu'il comprend en combinaison un rail de guidage (2 ; 110) sensiblement enterré dans le sol, et un véhicule agricole tel qu'une tondeuse à gazon, muni d'un châssis de support (6 ; 101), d'au moins un outil tel qu'une barre de coupe (8, 16a, 16b ; 102), de moyens (4a, 4b, 5a, 5b ; 103, 104a, 104b) d'entraînement et de moyens de guidage (27, 29 ; 106, 108) montés de façon mobile sur ledit châssis de support et agencés pour coopérer avec ledit rail de guidage de manière à amener ledit véhicule à suivre sensiblement le rail de guidage.

2. Système selon la revendication 1, caractérisé par le fait que lesdits moyens (4a,4b,5a,5b) d'entraînement sont des moyens d'entraînement et de direction, et que ledit véhicule est en outre muni de moyens de commande (30,33a,33b) pour commander lesdits moyens d'entraînement et de direction en fonction de la position relative des moyens de guidage par rapport au châssis de support.

3. Système selon la revendication 2, caractérisé par le fait que ledit rail de guidage comprend un tube en matériau relativement élastique fendu le long de sa génératrice supérieure, et que lesdits moyens de guidage comprennent un organe de guidage (29) agencé pour se déplacer à l'intérieur dudit tube en étant entraîné par ledit véhicule par l'intermédiaire d'un organe de support (27) traversant la fente de ce tube.

4. Système selon la revendication 3, caractérisé par le fait que ledit organe de support comprend une lame profilée à une extrémité de laquelle est monté ledit organe de guidage, ladite lame étant montée à son autre extrémité de façon articulée par rapport au châssis du véhicule.

5. Système selon l'une quelconque des revendications 2 à 4, caractérisé par le fait que lesdits moyens d'entraînement et de direction comprennent deux chenilles (4a,4b), et que les moyens de commande comprennent des moyens (33a,33b) pour cesser sélectivement l'entraînement d'une des chenilles lorsque les moyens de guidage s'écartent d'une position neutre prédéterminée par rapport au châssis.

6. Système selon la revendication 5, caractérisé par le fait que lesdits moyens d'entraînement et de direction comprennent deux moteurs électriques (5a,5b) agencés pour entraîner chacun une des chenilles, et que lesdits moyens pour cesser sélectivement l'entraînement d'une des chenilles comprennent deux commutateurs disposés chacun dans le circuit d'alimentation d'un des moteurs et dont l'organe d'actionnement est agencé pour coopérer avec une came (30) montée sur lesdits moyens de guidage.

7. Système selon la revendication 1, caractérisé par le fait que ledit châssis de support est en appui sur le sol par l'intermédiaire d'une béquille avant (106) portant à son extrémité inférieure un organe de guidage (108) agencé pour coopérer avec le rail de guidage, et que ledit véhicule est muni d'un moteur d'entraînement (103) monté sur le châssis de support, et de deux organes de roulement latéraux arrière (104a, 104b), lesdits organes de roulement étant agencés pour être entraînés par ledit moteur d'entraînement par l'intermédiaire d'un différentiel (105).

8. Système selon la revendication 7, caractérisé par le fait que ledit rail de guidage comprend un tube en matériau relativement élastique fendu le long de sa génératrice supérieure, et que ledit organe de guidage est agencé pour se déplacer à l'intérieur dudit tube en étant poussé par ledit véhicule par l'intermédiaire de ladite béquille traversant la fente de ce tube.

9. Système selon la revendication 8, caractérisé par le fait que ladite béquille est une lame profilée montée à son extrémité supérieure pivotante par rapport au châssis du véhicule autour d'un axe sensiblement vertical.

10. Système selon l'une quelconque des revendications 1 à 9, caractérisé par le fait qu'il comprend au moins une barre de coupe (11a, 11b) montée latéralement sur le châssis de support du véhicule, des moyens (16a,16b,17) étant prévus pour rétracter ladite barre de coupe latérale en cas de choc sur un obstacle (44).

11. Système selon la revendication 8, caractérisé par le fait que ladite barre de coupe latérale est montée à rotation autour d'un axe (17) sensiblement vertical solidaire du châssis, de manière à pouvoir pivoter vers l'arrière en cas de choc, contre l'action de moyens de rappel (18) agencés pour ramener la barre de coupe dans sa position latérale normale après le passage de l'obstacle.

12. Système selon l'une quelconque des revendications 10 et 11, caractérisé par le fait qu'il comprend deux barres de coupe latérales disposées chacune d'un des côtés du véhicule et agencées pour pouvoir éventuellement être rétractées simultanément.

Fig.1

0266295

Fig.7

Fig.2

0266295

Fig.3

Fig.4

Fig.5

0266295

**Fig. 6**

**Fig. 8**

**Fig. 9**

0266295

*Fig. 10*

104b

101

108

105

110 107 103

102

104a

---

XII

*Fig. 11*

107 101 103

106

104a

110

108 102 113

XII

---

*Fig. 12*

106

111 108 113

110

112

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-A-2 346 927  (WOLF-GERÄTE) <br> * Page 3, paragraphe 1 - page 4, paragraphe 1 * <br> --- | 1-3,7,8 | A 01 B  69/00 <br> B 62 D   1/26 <br> A 01 D  34/03 |
| Y | V.D.I. ZEITSCHRIFT, vol. 109, no. 7, mars 1967, pages 315-322, V.D.I. Verlag GmbH, Düsseldorf, DE; G. SEGLER: "Landtechnik" <br> * Page 319, figures 11,12, texte * <br> --- | 1-3,7,8 | |
| A | DE-A-3 332 192  (MAURER) <br> * En entier * <br> --- | 5,6 | |
| A | US-A-3 402 784  (ROBERSON) <br> * En entier * <br> --- | 6 | |
| A | DE-A-2 807 482  (FRIELINGSDORF) <br> --- | | |
| A | US-A-4 298 084  (NEWELL) <br> --- | | |
| A | US-A-3 073 409  (DAIFOTES) <br> --- | | |
| A | US-A-3 844 372  (NEECE) <br> --- | | DOMAINES TECHNIQUES RECHERCHES (Int. Cl.4) |
| A | US-A-4 180 964  (PANSIRE) <br> --- | | A 01 D <br> A 01 B <br> B 62 D |
| A | BE-A-  904 169  (DAELEMANS) <br> --- | | |
| A | FR-A-2 404 555  (DAIMLER-BENZ) <br> ----- | | |

Le présent rapport a été établi pour toutes les revendications

| Lieu de la recherche | Date d'achèvement de la recherche | Examinateur |
|---|---|---|
| LA HAYE | 17-12-1987 | DE LAMEILLIEURE D. |